# EUROPÄISCHE PATENTSCHRIFT

(11) **EP 0 853 555 B1**
(45) Veröffentlichungstag und Bekanntmachung des Hinweises auf die Patenterteilung: **02.02.2000**
(21) Anmeldenummer: 97929111.9
(22) Anmeldetag: 18.06.1997
(51) Int. Cl.: B60J 5/04, B60R 21/04

(54) **WAND- ODER BAUELEMENT UND VERFAHREN ZU SEINER HERSTELLUNG**
WALL OR BUILDING ELEMENT AND PROCESS FOR MANUFACTURING THE SAME
ELEMENT DE PAROI OU ELEMENT DE CONSTRUCTION ET SON PROCEDE DE FABRICATION

(30) Priorität: 13.08.1996 DE 19632550
(43) Veröffentlichungstag der Anmeldung: 22.07.1998
(73) Patentinhaber: Möller Plast GmbH, 33649 Bielefeld (DE)
(72) Erfinder: HESCH, Rolf, D-32657 Lemgo (DE)
(74) Vertreter: Schirmer, Siegfried, Dipl.-Ing.
(86) Internationale Anmeldenummer: DE9701239
(87) Internationale Veröffentlichungsnummer: WO9806592

(56) Entgegenhaltungen:
- DE-A- 4 001 947
- DE-A- 4 228 626
- DE-A- 4 338 249
- US-A- 4 272 103
- US-A- 5 395 135
- PATENT ABSTRACTS OF JAPAN vol. 015, no. 155 (M-1104), 18.April 1991 & JP 03 028020 A (MAZDA MOTOR CORP), 6.Februar 1991,

## Beschreibung

Die Erfindung betrifft ein Wand- oder Bauelement, insbesondere für die Karosserie oder Teile der Karosserie von Kraftfahrzeugen, zur Erzielung eines Aufprallschutzes sowie zur Erhöhung der Druck- und Biegesteifigkeit und der Wärmedämmwirkung und betrifft weiterhin ein Verfahren zur Herstellung eines derartigen Wand- oder Bauelements.

Bei der Konstruktion von Fahrzeugen für den Personenverkehr nimmt der Insassenschutz einen ständig wachsenden Stellenwert ein. Beispielsweise soll das Problem des Seitenaufprallschutzes durch den Einbau von Querholmen in die Türen gelöst werden. Bekanntermaßen werden in die Hohlräume der Türen auch Prallkörper aus Schaumstoff eingelegt, um bei einem Aufprall die auftretenden Kräfte zu verteilen und durch Verformung Aufprallenergie zu vernichten. Seitenairbags sind weitere bekannte Maßnahmen zum Schutz der Fahrzeuginsassen. Die bekannten konstruktiven Maßnahmen tragen jedoch nur in begrenztem Maße zur Festigkeit und Steifigkeit der Karcsserie und damit zur Sicherheit der Insassen bei.

Ein weiteres Problem des modernen Fahrzeugbaus ist der Wärmeschutz. Die Fahrzeuge werden in immer größerem Umfang mit Klimaanlagen ausgerüstet. Dabei wird aufgrund der unzureichenden Wärmedämmung in hohem Maße Kühlenergie vergeudet. Eine bessere Wärmedämmung könnte durch verminderte Heizleistung im Winter und geringere Gebläseleistung im Sommer einen wesentlichen Beitrag zur Senkung des Energieverbrauchs leisten.

Aus dem Dokument US-A-5,395,135 ist bereits ein Wand- oder Bauelement für eine Fahrzeugtür bekannt, bei dem Prallkörper an die Bleche angeklebt oder angeklemmt sind. Diese Prallkörper stehen nicht miteinander in Verbindung, sondern sind nur in bestimmten Bereichen der Tür angeordnet. Hierdurch wird zwar ein Aufprall gemildert und durch Kompression des vorhandenen Schaumstoffs oder der Waben etwas Energie vernichtet, keinesfalls kann hierdurch aber die Aufprallenergie in dem steifen Fahrzeugkäfig abgetragen werden.

Der Erfindung liegt die Aufgabe zugrunde, ein vorzugsweise für die Karosserie oder Teile der Karosserie von Kraftfahrzeugen einsetzbares Wand- oder Bauelement zu entwickeln, das den Fahrzeuginsassen bei Unfällen eine hohe Sicherheit bietet und die Struktursteifigkeit und die Wärmedämmung verbessert.

Diese Aufgabe wird durch ein Wand- oder Bauelement und einem Verfahren zur Herstellung eines solchen Elements mit den Merkmalen des Anspruchs 1 gelöst, wobei das Bauelement vollflächig die anschließenden tragenden Teile der Karosserie überdeckt.

Das derart gebildete Verbundelement, das als Wandelement für die Karosserie oder als Bauteil für Stoßstangen, Holme und dgl., aber auch in anderen Bereichen als Wand- oder Bauteil mit hoher Biegesteifigkeit und Wärmedämmung vielseitig eingesetzt werden kann, ist kostengünstig und mit geringem Aufwand an Primärrohstoffen herstellbar. Bei der Verwendung als Karosserie-Wandelement bietet es bei Unfällen einen hervorragenden Insassenschutz, da die Karosserie oder andere Bauteile nicht splittern und keine scharfen, zu Verletzungen führenden Bruchkanten entstehen und andererseits die Aufprallenergie von dem Wand- oder Bauelement, wie Türen, Holmen, Karosseriewänden, Stoßstangen u.a.m., aufgenommen, abgetragen und flächig verteilt wird.

Der Materialaufwand für das in diesem Fall als flächiges, dünnwandiges Wandteil eingesetzte Karosserieblech wird erheblich gesenkt. Dadurch kann das Fahrzeuggewicht meist verringert und somit der Energieverbrauch und letztlich der Schadstoffausstoß vermindert werden. Das Klima in mit dem erfindungsgemäßen Wandelement ausgerüsteten Fahrzeugen oder anderen Innenräumen kann, ohne aufwendige Klimaanlagen verwenden zu müssen, erheblich verbessert werden.

Nach einem weiteren Merkmal der Erfindung ist der aus dem Bindemittel und dem Bewehrungsmittel gebildete Formkörper vollflächig mit dem dünnwandigen Wandteil verklebt bzw. an dieses angeschäumt oder angeformt.

Nach einem weiteren Merkmal der Erfindung sind als Bewehrungsmittel nachwachsende Rohstoffe - vorzugsweise Dikotyledone, wie Flachs, Hanf, Jute, Lein und dgl., oder Monokotyledone, wie Bambus oder Riesengräser - vorgesehen. Vorteilhafterweise können als Bewehrungsmittel auch andere mineralischen oder synthetischen Fasern eingesetzt werden.

In vorteilhafter Weiterbildung der Erfindung sind die nachwachsenden Rohstoffe unzerlegt und/oder teilweise zerlegt in Form von Halmen, Halmabschnitten, Fasern, Faserbündeln, Zwirnen, Fäden oder Schälen bzw. als Vliese, Gewebe oder Roving aus diesen in dem Bindemittel angeordnet.

In weiterer Ausbildung der Erfindung besteht das Bindemittel aus einem synthetischen, biologischen oder naturderivaten Stoff oder aus Matrices aus Natur- oder Kunststoffen. Die eingesetzten Bindemittel können aufschäumbar sein.

Im Innern des Formkörpers bzw. in Bereichen geringer Zug- und Druckbeanspruchung können Recyclatkerne aus unbewehrten oder bewehrten Recyclingprodukten, wie Schaum, Schaumgranulat oder vorgeformten oder vorgebundenen Teilen aus diesen, Schaum-Textil-Kombinationen, Textilien oder Naturschaumstoffe, zum Beispiel Sonnenblumenmark, vorgesehen sein.

Nach einem weiteren Merkmal der Erfindung kann zwischen dem aus aufgeschäumtem Bindemittel und Bewehrungsmittel bestehenden Formkörper und dem dünnwandigen Wandteil eine mit diesen jeweils fest verklebte Isolierschicht aus Schaumstoffrecyclat in Form von Flocken oder als Platte angeordnet sein.

Das erfindungsgemäße Wand- oder Bauelement kann auch in Sandwichbauweise aus zwei oder mehreren getrennt hergestellten und miteinander verbundenen Formkörpern bestehen. Zwischen den Formkörpern kann ein Dämmkern aus Bindemittel und Bewehrungsmitteln oder aus Recyclingprodukten vorgesehen sein, wobei in dem Dämmkern des weiteren Aussparungen zur Aufnahme von Betätigungselementen, Kabeln oder dgl. ausgebildet sein können.

In weiterer Ausbildung der Erfindung ist zwischen dem dünnwandigen Wandteil und dem Formkörper eine hinterpreßte oder hinterspritzte harte Schale angeordnet, die mit beiden fest verbunden ist. Der Formkörper kann auf der dem Wandteil gegenüberliegenden Seite mit einer fest verbundenen zweiten harten Schale als Gegengurt abgedeckt sein. An die erste harte Schale können auch in Querrichtung abstrebende Stege angeformt sein, wobei die dadurch gebildeten Hohlräume in der oben beschriebenen Weise mit von Bindemittel umgebenen Bewehrungsmitteln oder Recyclingprodukten oder beidem gefüllt sind.

Gemäß dem erfindungsgemäßen Verfahren zur Herstellung des Wand- und Bauelements als Verbundwerkstück wird zunächst auf das dünnwandige, vorzugsweise aus Blech bestehende Wandelement das Bewehrungsmittel, vorzugsweise in Form von nachwachsenden Rohstoffen oder Teilen derselben, aufgetragen und nach Aufsetzen einer Gegenform das Bindemittel sowie ein zeitverzögert oder sofort wirkendes Aufschäummittel über Einspritzkanülen oder Düsen in den so gebildeten Hohlraum eingebracht. Das Bindemittel umfließt zunächst das Bewehrungsmittel, um während des darauffolgenden Aufschäumens eine feste Verbindung zwischen dem Wandteil und dem Schaum sowie dem Bewehrungsmittel und dem Schaum zu schaffen und gleichzeitig das Bewehrungsmittel in seiner Lage zu fixieren. Zur Haftverbesserung zwischen dem Wandteil und dem Formkörper aus Schaum und Bewehrungsmittel kann die dem Formkörper zugewandte Seite des Wandteils zuvor geprimert werden.

Vor dem Auflegen des Bewehrungsmittels kann das dünnwandige Wandteil mit einer harten Schale hinterpreßt oder hinterspritzt werden, wobei nach der Ausbildung des Formkörpers eine zweite harte Schale als Gegengurt aufgebracht wird.

Die erste harte Schale kann - mit Querstegen versehen - separat und auch mehrteilig hergestellt werden und bereits vorgefertigt auf dem Wandteil verklebt werden, wobei mehrere harte Schalen mit Querstegen auch formschlüssig untereinander und am Wandteil gehalten werden.

Schließlich können auch die Formkörper selbst, und zwar mit oder ohne Recyclatkerne, getrennt von dem dünnwandigen Wandteil hergestellt und dann mit dem Wandteil bzw. der harten Schale verklebt werden.

Weitere zweckmäßige Ausgestaltungen der Erfindung sind in den Unteransprüchen aufgeführt.

In einem Ausführungsbeispiel wird die Erfindung anhand von drei in der Zeichnung wiedergegebenen Ausführungsvarianten unter Darstellung weiter Merkmale und Vorteile näher erläutert. Es zeigen:
- Fig. 1: eine Schnittansicht eines erfindungsgemäßen Wand- oder Bauelements in Verbundbauweise, das mit einem weiteren Verbundbauteil verbunden ist, am Beispiel der Tür eines Kraftfahrzeugs;
- Fig. 2: eine zweite Ausführungsform eines erfindungs gemäßen, als Fahrzeugtür nach Fig. 1 dienenden Bauelements im Schnitt;
- Fig. 3: eine Schnittansicht einer weiteren Ausführungsvariante eines bei einer Fahrzeugtür angewendeten Bauelements in Verbundbauweise, das an ein zweites Verbundbauteil angeschlossen ist; und
- Fig. 4a/b: Seitenansichten einer Fahrzeugtür bzw. der tragenden Teile eines PKW im Bereich der Fahrzeugtür, wobei durch Pfeile das allseitige Abtragen der bei einem Seitenaufprall erzeugten Kräfte auf die tragenden Teile der Fahrzeugtür und der Karosserie Karosserie dargestellt ist.

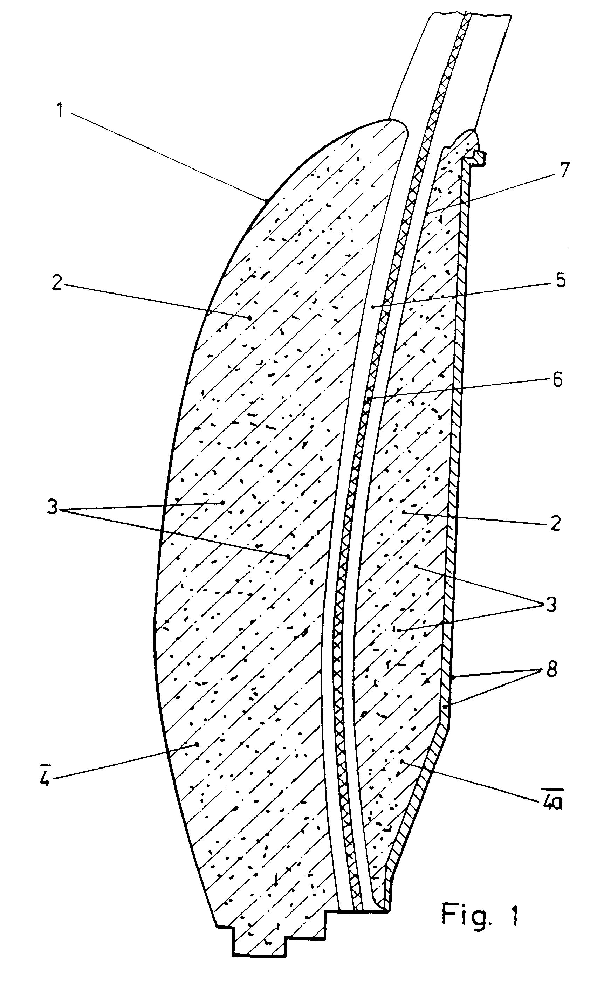

Fig. 1 zeigt ein als Verbundkörper hergestelltes Wand- oder Bauelement am Beispiel einer Tür für ein Kraftfahrzeug, wobei die Tür wegen der erforderlichen Unterbringung der Fensterscheibe und des für deren Bewegung erforderlichen Mechanismus aus zwei jeweils als Verbundkörper hergestellten und aneinander befestigten, jedoch zwischen sich einen Kanal freilassenden Wand- oder Bauelementen besteht. An ein dünnwandiges Wandteil 1, nämlich die aus Blech bestehende Außenhaut einer Kraftfahrzeugtür schließt sich ein aus einem aufgeschäumten synthetischen, biologischen oder naturderivaten Bindemittel 2 und von diesem umgebenen und dadurch in ihrer Lage fixierten Bewehrungsmitteln 3 bestehender Formkörper 4 an. Der Formkörper 4 ist mit einem zweiten, die Innenverkleidung der Fahrzeugtür bildenden Formkörper 4a bzw. Verbundteil verbunden, wobei zwischen beiden Formkörpern ein Kanal 5 zur Aufnahme einer Fensterscheibe 6, der zu deren Führung erforderlichen Führungsschiene 7 und weiterer, in der Zeichnung nicht dargestellter Betätigungselemente zur Bewegung der Scheibe 6 vorgesehen ist. Die Außenseite des zweiten Formkörpers 4a ist mit einer Dekorschicht 8 als dünnschichtiges Wandteil bedeckt und mit dem Formkörper 4a durch Anschäumen, Kleben o.ä. fest verbunden.

Die Herstellung des in Fig. 1 gezeigten Wand- oder Bauelements erfolgt in der Weise, daß das als Türaußenhaut aus Blech dienende Wandteil 1 in eine Form eingelegt wird und dessen Innenseite gleichmäßig mit einer Schicht aus Bewehrungsmitteln 3 belegt wird. Als Bewehrungsmittel werden nachwachsende Rohstoffe in Form von Halmen und Halmabschnitten oder Fasern und Faserbündeln sowie daraus hergestellte Vliese und dgl. verwendet. Als nachwachsende Rohstoffe kommen hier vorzugsweise Mono- und Dikotyledone in Frage, die sich aus folgenden Gründen durch hervorragende mechanische Eigenschaften auszeichnen: Bei den Dikotyledonen besteht die Peripherie des Halmes aus einem Bastring, der sich besonders bei den Bastfasergewächsen aus extrem langen und hochfesten Fasern zusammensetzt. Die zylindrische Anordnung der Bastfasern stellt mechanisch einen idealen Querschnitt dar, um einen besonders hohen Elastizitätsmodul sowie eine hohe Biegefestigkeit und Knicksteifigkeit zu bewirken. Monokotyledone haben zwar keinen ausgeprägten Bastring, aber einen Ring aus kürzerfaserigen Sklerenchymsträngen, an die sich bei vielen Vertretern ein hochfester Ring von Leitbündeln anschließt, die von hochfestem Festigkeitsgewebe begleitet sind. Hinzu kommt bei ihnen eine stark ausgeprägte Epidermis mit hoher Zähigkeit.

Die erfindungsgemäß eingesetzten nachwachsenden Rohstoffe sind weiterhin insofern vorteilhaft, als deren Fasern in eine Parenchymmatrix eingebettet sind. Das Parenchym ist drucksteif und großlumig und erlaubt im Zusammenwirken mit den peripheren Festigkeitssträngen eine starke Durchbiegung. Bei Dikotyledonen befindet sich hingegen in der Halmmitte anstelle des Parenchyms ein Holzkern, der ebenfalls durch eine extrem niedrige Holzdichte gekennzeichnet ist.

Nach dem Aufbringen des Bewehrungsmittels 3 aus nachwachsenden Rohstoffen auf das Wandteil 1 wird eine Gegenform (nicht dargestellt) aufgelegt und über entsprechende Kanülen oder Einspritzdüsen das zeitverzögert aufzuschäumende Bindemittel 2 in die so gebildete hohle Form eingebracht. Das Bindemittel 2 ist während des Einspritzens noch gut fließfähig, so daß es die Bewehrungsmittel 3 vollständig umfließen und in alle Zwischenräume eindringen kann. Der Aufschäumprozeß setzt erst mit einer gewissen Zeitverzögerung nach entsprechender Verteilung des Bindemittels ein, wobei der Schaum nun fest an dem Bewehrungsmittel haftet und dieses in seiner Lage fixiert.

Nachdem die Innenseite des Wandteils 1 (Türblech) vor dem Einlegen in die Form bei Bedarf geprimert wurde, geht der Formkörper 4 aus aufgeschäumtem Bindemittel und Bewehrungsmittel auch eine festhaftende, vollflächige Verbindung mit dem Wandteil 1 ein, so daß nach dem Entfernen der Gegenform ein einstückiger Verbundkörper zur Verfügung steht.

Bei dem anhand einer Fahrzeugtür dargestellten Ausführungsbeispiel kann in gleicher Weise separat ein zweiter Formkörper 4a auf eine Innenverkleidung bzw. Dekorschicht 8 als dünnwandiges Wandteil hergestellt werden, wobei beide Verbundteile anschließend fest, aber einen Zwischenraum zur Aufnahme der Fensterscheibe und notwendiger Führungs- und Betätigungselemente bildend, sandwichartig miteinander verbunden werden.

Mit auf diese Weise gefertigten Verbundkörpern, die gleichermaßen als Holm oder Wandelement der Karosserie oder als Stoßstange usw. ausgebildet sein können, wird durch Erhöhung des Widerstandsmoments und des Verformungswegs ein hervorragender Seitenaufprallschutz bei Kraftfahrzeugen erreicht, da die Aufprallkräfte gleichmäßig verteilt und abgetragen und in die Käfigstruktur des Fahrgastraums eingetragen werden und die Aufprallenergie im wesentlichen vernichtet wird. Gleichzeitig wird die Wärmedämmung der Karosserie verbessert und folglich die CO₂-Emission und der Energieverbrauch vermindert und schließlich das Klima im Fahrzeuginnern verbessert. Aufgrund der Verbundbauweise aus einem flächigen Wandteil und dem bewehrten Formkörper (Schaumkörper) kann das Karosserieblech wesentlich dünner als allgemein üblich ausgeführt sein, so daß der Materialaufwand für das primärenergieaufwendige Karosserieblech und letztlich das Gewicht der Karosserie meist gesenkt werden können. Schließlich entstehen bei einem Aufprall, da das Verbundmaterial nicht splittert, keine scharfen Kanten und somit wird die Sicherheit der Fahrzeug-insassen oder anderer an einem Unfall beteiligter Personen erhöht.

Gemäß der Erfindung ist es entgegen dem oben beschriebenen Herstellungsverfahren aber auch möglich, den bewehrten Formkörper 4, 4a separat in einer Form, d.h. getrennt von dem Wandteil 1 (oder 8) herzustellen und anschließend mit dem dünnwandigen Wandteil zu verkleben. Eine noch höhere Steifigkeit des als Verbundteil hergestellten Bauelements läßt sich bei Verwendung von Integralschaum erzielen, wobei in diesem Fall die Wandstärke des dünnwandigen Wandteils 1 noch weiter verringert werden kann.

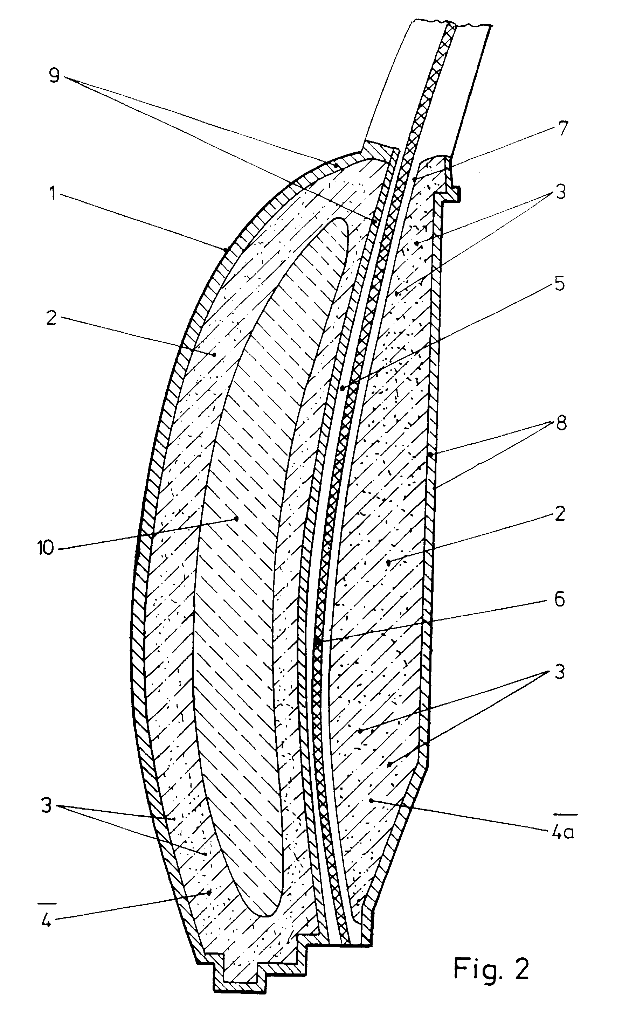

Fig. 2 zeigt eine zweite Ausführungsvariante der Erfindung, und zwar ebenfalls am Beispiel der Tür eines Kraftfahrzeugs, bei der der Aufprallschutz weiter verbessert und die Stärke des Wandteils 1 noch geringer ist.

Dieses Wand- oder Bauteil unterscheidet sich von dem in Fig. 1 dargestellten im wesentlichen dadurch, daß das dünnwandige Wandteil 1, d.h. die Außenhaut der Tür, der Karosserie, eines Holmes usw., mit einer harten Schale 9, vorzugsweise unter Verwendung von Bewehrungsmitteln aus nachwachsenden Rohstoffen, hinterpreßt oder hinterspritzt ist. Auf diese harte Schale 9 wird in der zuvor beschriebenen Weise der Formkörper 4 aus bewehrtem Schaum bzw. Integralschaum und Bewehrungsmitteln in fester Verbindung mit der Schale 9 aufgebracht sowie eine weitere harte Schale 9 als Gegengurt auf den Formkörper 4 aufgetragen.

Aus Fig. 2 ist außerdem ersichtlich, daß sich innerhalb des Formkörpers 4 zur Einsparung von Primärmaterial ein Recyclatkern 10 aus einem leichten Recyclingmaterial befindet. Die Größe dieses Recyclatkerns ist variierbar. Er kann letztlich über den gesamten Querschnitt des Formkörpers 4 reichen und überdies mit nachwachsenden Rohstoffen oder anderen Materialien bewehrt sein. Selbstverständlich kann auch dieser Formkörper, wie anhand der Fig. 1 beschrieben, separat hergestellt und dann mit dem dünnwandigen Wandteil 1 verklebt werden, um auf diese Weise den Verbundkörper zu bilden. Unter Freilassung eines Kanals 5 ist an das so gebildete Bauelement ein zweiter Formkörper 4a bzw. ein zweites Bauelement fest angefügt.

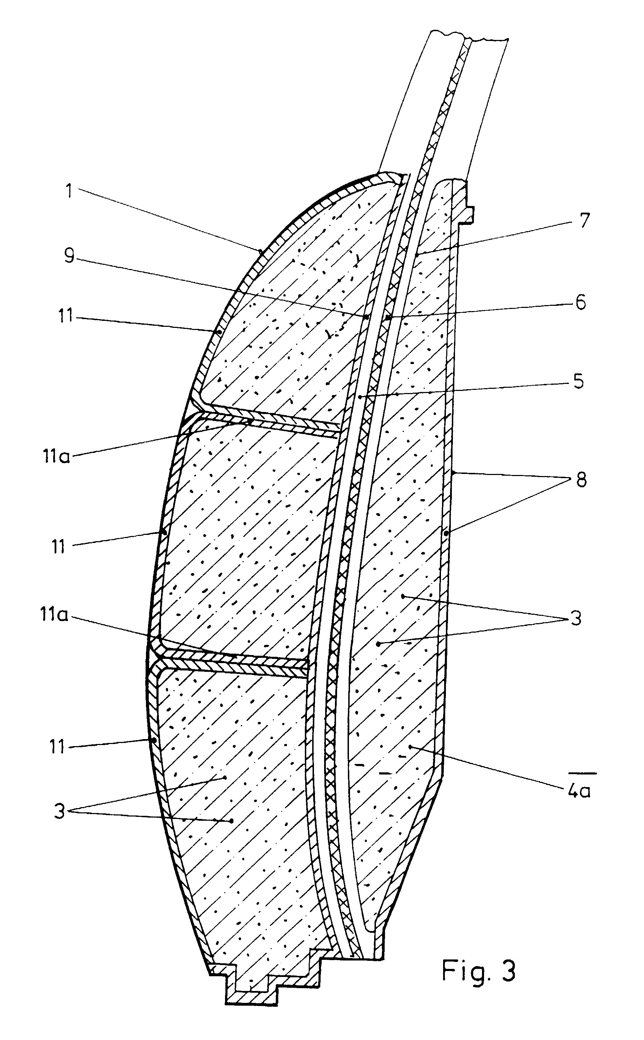

In Fig. 3 ist schließlich eine dritte Variante eines als Verbundkörper ausgebildeten Wand- oder Bauelements für eine Kfz-Tür wiedergegeben. In diesem Fall ist das Wand- oder Bauelement durch Querstege 11a versteift, die ein Teil von separat hergestellten und mit dem Wandteil 1 fest verbundenen Halbschalen 11 sind. Die Halbschalen 11 werden formschlüssig in das Wandteil 1 eingelegt und an diesen sowie untereinander durch Kleben oder Einschäumen gehalten. Die Halbschalen 11 mit den im wesentlichen senkrecht von diesen abstrebenden Querstegen 11a sind unter vorzugsweiser Verwendung von nachwachsenden Rohstoffen als Bewehrungsmittel 3 hergestellt, während die von den Halbschalen und Querstegen gebildeten Hohlräume durch mit einem Bindemittel verschäumte Bewehrungsmittel aus nachwachsenden Rohstoffen ausgefüllt oder auch mit einem Recyclatkern oder vollständig mit einer Schaumfüllung versehen sind. Die derart gefüllten Halbschalen 11 sind mit einer harten Schale 9 abgedeckt, die mit den Halbschalen 11 bzw. den Querstegen 11a eine feste Verbindung, z.B. durch das Ausschäumen der Hohlräume, bilden. Die harten Schalen 9 bzw. die Halbschalen 11 sind in Preßtechnik oder auch in Spritz- oder Blastechnik mit oder ohne Verwendung von Bewehrungsmitteln hergestellt.

Mit dieser dritten Variante kann eine besonders hohe Steifigkeit und Biegefestigkeit bei weiterer Verringerung der Materialstärke der Außenhaut (Wandteil 1) erreicht werden.

An das so hergestellte Verbundelement in der wieder am Beispiel einer Fahrzeugtür erläuterten Ausführungsform kann, wie bereits oben beschrieben, ein zweiter Formkörper 4a angeschlossen werden, in den verschiedene Funktionselemente (nicht dargestellt), wie Kartentaschen, Armlehnen und dgl., integriert sein können. Dabei kann das dünnwandige innere Wandteil (Dekorschicht 8) auch als dünne Blechhaut ausgebildet sein, um dadurch eine weitere Erhöhung der Steifigkeit der Fahrzeugtür zu bewirken.

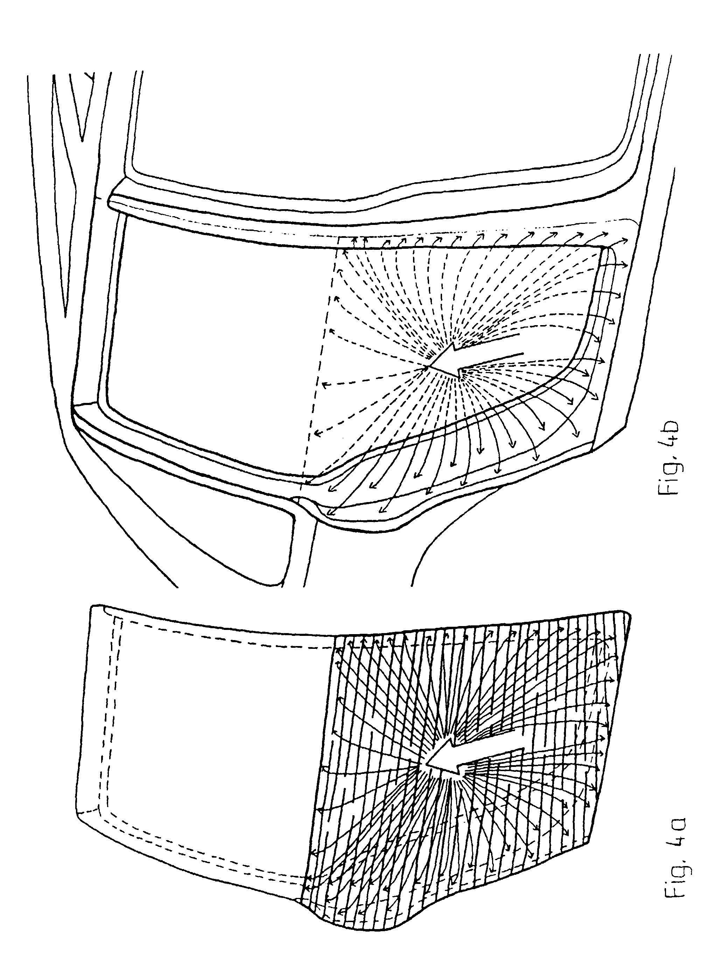

Aus den in den Figuren 4a und 4b wiedergegebenen Darstellungen einer PKW-Tür bzw. des diese aufnehmenden Teils der Karosserie ist erkennbar, wie die Tür in Form einer steifen Schale die Falze der Türöffnung - mit Ausnahme des Fensterbereichs - vollflächig überdeckt und somit die bei einem Aufprall erzeugte Energie (großer Pfeil) großflächig auf den gesamten Türfalz in Richtung der kleinen Pfeile abgetragen wird. Zusätzlich wird in Kombination mit dem Abtragen der Kräfte die Aufprallenergie durch die Kompression des sich über die gesamte Türfläche erstreckenden Schaumkerns aufgenommen.

## Patentansprüche

1. Wand- oder Bauelement für die Karosserie oder Teile der Karosserie von Kraftfahrzeugen odgl., zur Erzielung eines Aufprallschutzes sowie zur Erhöhung der Druck- und Biegesteifigkeit und der Wärmedämmwirkung, bestehend aus einem durch ein flächiges, dünnwandiges Wandteil (1) mit einem sich daran vollflächig anschließenden Bindemittel (2) und in dieses eingebettetem Bewehrungsmittel (3) gebildetem Verbundelement, wobei das Bindemittel (2) aus einem aufschäumbaren Stoff gebildet ist, der an dem Wandteil (1) anschäumbar oder der aufgeschäumte Stoff mit den Bewehrungsmitteln (3) als Formkörper (4, 4a) mit dem Wandteil (1) vollflächig verklebbar ist und die Bewehrungsmittel (3) parallel zum Wandteil (1) verlaufen und das so gebildetete Verbundelement vollflächig die anschließenden tragenden Teile der Karosserie überdeckt und dadurch Aufprallkräfte in die tragenden Teile abtrag- und einleitbar ist.

2. Wand- oder Bauelement nach Anspruch 1, dadurch gekennzeichnet, daß als Bewehrungsmittel (3) nachwachsende Rohstoffe vorgesehen sind.

3. Wand- oder Bauelement nach Anspruch 2, dadurch gekennzeichnet, daß die nachwachsenden Rohstoffe unzerlegt und/oder teilweise zerlegt und/oder weitgehend zerlegt in Form von Halmen, Halmabschnitten, Fasern, Faserbündeln, Zwirnen, Fäden oder Schälen bzw. Vliesen, Geweben oder Roving aus diesen in dem Bindemittel (2) angeordnet sind.

4. Wand- oder Bauelement nach Anspruch 2 oder 3, dadurch gekennzeichnet, daß als nachwachsende Rohstoffe Dikotyledone, wie Flachs, Hanf, Jute, Lein und dgl. und Monokotyledone, wie Bambus oder Riesengräser, vorgesehen sind.

5. Wand- oder Bauelement nach einem der Ansprüche 1 bis 4, dadurch gekennzeichnet, daß das Bindemittel (2) aus einem synthetischen, biologischen oder naturderivaten Stoff gebildet ist oder aus Matrices aus Natur- und Kunststoffen besteht.

6. Wand- oder Bauelement nach einem der Ansprüche 1 bis 5, dadurch gekennzeichnet, daß in Bereichen geringer Zug- und Druckbeanspruchung im Innern des Formkörpers (4) Recyclatkerne (10) mit verminderten Festigkeitseigenschaften und geringem Gewicht vorgesehen sind.

7. Wand- oder Bauelement nach Anspruch 6, dadurch gekennzeichnet, daß die Recyclatkerne (10) aus unbewehrten Recyclatprodukten, wie Schaum, Schaumgranulat oder vorgeformten oder vorgebundenen Teilen aus diesen, Schaum-Textil-Kombinationen oder Textilien gebildet sind.

8. Wand- oder Bauelement nach einem der Ansprüche 1 bis 7, dadurch gekennzeichnet, daß es in Sandwichbauweise aus zwei oder mehreren getrennt hergestellten und miteinander verbundenen Formkörpern (4, 4a) besteht.

9. Wand- oder Bauelement nach Anspruch 8, dadurch gekennzeichnet, daß die miteinander verbundenen Formkörper (4, 4a) aus Schalen bestehen, die zwischen sich einen Hohlraum zur Aufnahme eines Dämmkerns freilassen.

10. Wand- oder Bauelement nach Anspruch 9, dadurch gekennzeichnet, daß der Dämmkern aus einem Bindemittel (2) und Bewehrungsmitteln (3) besteht.

11. Wand- oder Bauelement nach Anspruch 10, dadurch gekennzeichnet, daß der Dämmkern aus Recyclingprodukten ohne Bewehrungsmittel besteht.

12. Wand- oder Bauelement nach einem der Ansprüche 9 bis 11, dadurch gekennzeichnet, daß in dem Dämmkern Aussparungen zur Aufnahme von Funktionselementen, Betätigungselementen, Kabeln und dgl. vorgesehen sind.

13. Wand- oder Bauelement nach Anspruch 8, dadurch gekennzeichnet, daß es in Sandwichbauweise zur leichten Zugänglichkeit zu bzw. Austauschbarkeit von Funktions- und Betätigungselementen ganz oder teilweise mehrschalig aufgebaut ist.

14. Wand- oder Bauelement nach einem der Ansprüche 1 bis 13, dadurch gekennzeichnet, daß das an den Formkörper (4, 4a) aus Bewehrungsmittel und Bindemittel anschließende dünnwandige Wandteil (1, 8) aus Blech oder einem dünnschichtigen, flächigen Dekormaterial besteht.

15. Wand- oder Bauelement nach einem der Ansprüche 1 bis 14, dadurch gekennzeichnet, daß sich an das aus Blech bestehende dünnwandige Wandteil (1) eine hinterpreßte oder hinterspritzte harte Schale (9) zur Aussteifung der Blechhaut und daran der mit der harten Schale fest verbundene Formkörper (4) aus Bindemittel und Bewehrungsmittel anschließt.

16. Wand- oder Bauelement nach Anspruch 15, dadurch gekennzeichnet, daß in die harte Schale hoch auf Zug beanspruchbare Bewehrungsmittel eingebunden sind.

17. Wand- oder Bauelement nach Anspruch 15 und 16, dadurch gekennzeichnet, daß sich an den Formkörper (4) zu beiden Seiten eine harte Schale (9) anschließt.

18. Wand- oder Bauelement nach einem der Ansprüche 15 bis 17, dadurch gekennzeichnet, daß innerhalb des durch harte Schalen (9) abgedeckten Formkörpers (4) ein (oder mehrere) Recyclatkern(e) ausgebildet ist (sind).

19. Wand- oder Bauelement nach einem der Ansprüche 15 bis 18, dadurch gekennzeichnet, daß an die an das Wandteil (1) anschließende harte Schale (9) in Querrichtung abstrebende Querstege (11a) angeformt sind.

20. Wand- oder Bauelement nach einem der Ansprüche 15 bis 19, dadurch gekennzeichnet, daß die mit Querstegen versehenen harten Schalen Halbschalen (11) bilden, die mit dem Wandteil (1) und miteinander fest verbunden sind.

21. Wand- oder Bauelement nach einem der Ansprüche 15 bis 20, dadurch gekennzeichnet, daß die in den Halbschalen (11) gebildeten Hohlräume mit Bewehrungs- und Bindemitteln oder unbewehrtem Recyclat ausgefüllt sind oder Bewehrungs- und Bindemittel mit Recyclatkern vorgesehen sind.

22. Verfahren zur Herstellung des Wand- oder Bauelements als Verbundkörper nach einem der Ansprüche 1 bis 21, dadurch gekennzeichnet, daß auf das in eine Form eingelegte dünnwandige Wandteil (1) zunächst das Bewehrungsmittel aufgelegt und nach Aufbringen einer Gegenform das Bindemittel sowie ein Aufschäummittel über Einspitzkanülen oder -düsen in den so gebildeten Hohlraum eingebracht wird, wobei zur Erzielung einer allseitigen Ummantelung des Bewehrungsmittels das Aufschäumen des Bindemittels zeitverzögert durchgeführt wird.

23. Verfahren nach Anspruch 22, dadurch gekennzeichnet, daß das Aufschäummittel in eine offene Form eingebracht wird.

24. Verfahren nach Anspruch 22 oder 23, dadurch gekennzeichnet, daß das Aufschäumen des Bindemittels ohne Verzögerung durchgeführt wird.

25. Verfahren nach einem der Ansprüche 22 bis 24, dadurch gekennzeichnet, daß das dünnwandige Wandteil (1) an der Schaumstoffauftragsseite zur Haftverbesserung vor dem Auftragen und Aufschäumen des Bindemittels geprimert wird.

26. Verfahren nach einem der Ansprüche 22 bis 25, dadurch gekennzeichnet, daß das dünnwandige Wandteil (1) vor der Ausbildung oder Anordnung des Formkörpers (4) mit einer harten Schale (9) unter Verwendung von Bewehrungsmitteln (3) hinterpreßt oder hinterspritzt wird und auf die freie Seite des Formkörpers (4) anschließend wahlweise eine zweite harte Schale aufgebracht wird.

27. Verfahren nach Anspruch 26, dadurch gekennzeichnet, daß beim Auftragen der harten Schale (9) Querstege (11a) angeformt werden.

28. Verfahren nach einem der Ansprüche 22 bis 27, dadurch kennzeichnet, daß zur Bildung des Recyclatkerns (10) beim Einlegen des Bewehrungsmittels (3) ein Schaumstoff oder ein vergleichbares leichtes Material mit eingebracht wird und anschließend das Bindemittel (2) eingespritzt und danach aufgeschäumt wird.

29. Verfahren zur Herstellung des Wand- oder Bauelements nach einem der Ansprüche 1 bis 25, dadurch gekennzeichnet, daß die harten Schalen (9) mit oder ohne Querstege (11a) sowie die aus Bindemittel (2) und Bewehrungsmittel (3) durch Aufschäumen hergestellten Formkörper (4, 4a) mit oder ohne Recyclatkerne (10) jeweils getrennt von dem Wandelement (1, 8) geformt werden und anschließend mit dem dünnwandigen Wandteil fest zu einem Verbundkörper verklebt werden.

## Claims

1. Wall element or constructional unit for the chassis or parts of the chassis of motor vehicles or the like for achieving an impact protection as well as for increasing the stiffness against pressure and bending and for increasing the thermal insulation effect, consisting of a compound element formed by an areal thin-walled wall part (1) with a binding means (2) adjoining thereat over the entire area and an armouring means (3) embedded therein, wherein the binding means (2) is formed of a foamable substance, which is foamable onto the wall part (1) or the foamed substance with the armouring means (3) as moulded body (4, 4a) is gluable together with the wall part (1) over the entire area and the armouring means (3) extend parallelly to the wall part (1) and the thus formed compound element covers the adjoining supporting parts of the chassis over the entire area and impact forces are thereby removable and introducible into the supporting parts.

2. Wall element or constructional unit according to claim 1, characterised in that regrowing raw materials are provided as armouring means (3).

3. Wall element or constructional unit according to claim 2, characterised in that the regrowing raw materials are arranged in the binding means (2) undecomposed and/or partially decomposed and/or largely decomposed in the shape of stalks, portions of stalks, fibres, bundles of fibres, threads, filaments or husks or as fleeces, tissues or rovings of these.

4. Wall element or constructional unit according to claim 2 or 3, characterised in that the dicotyledons, such as flax, hemp, jute, flax or the like, and monocotyledons, such as bamboo or giant grasses, are provided as regrowing raw material.

5. Wall element or constructional unit according to one of the claims 1 to 4, characterised in that the binding means (2) is formed of a synthetic or biological substance or one derived from nature or consists of matrices of natural and synthetic substances.

6. Wall element or constructional unit according to one of the claims 1 to 5, characterised in that recycled matter cores (10) of reduced strength properties and low weight are provided in regions of low stress in tension or compression in the interior of the moulded body (4).

7. Wall element or constructional unit according to claim 6, characterised in that the recycled matter cores (10) are formed of unarmoured recycled matter products, such as foam, foam granulate or preliminarily shaped or preliminarily bound parts of these, combinations of foam and textile or of textiles.

8. Wall element or constructional unit according to one of the claims 1 to 7, characterised in that it consists of two or more moulded bodies (4, 4a), which are produced separately and connected together, in sandwich mode of construction.

9. Wall element or constructional unit according to claim 8, characterised in that the moulded bodies (4, 4a), which are connected together, consist of bowls which between them leave a hollow space free for the reception of an insulating core.

10. Wall element or constructional unit according to claim 9, characterised in that the insulating core consists of a binding means (2) and armouring means (3).

11. Wall element or constructional unit according to claim 10, characterised in that the insulating core consists of recycled matter products without armouring means.

12. Wall element or constructional unit according to one of the claims 9 to 11, characterised in that recesses for the reception of functional elements, actuating elements, cables and the like are provided in the insulating core.

13. Wall element or constructional unit according to claim 8, characterised in that it is built up entirely or partially in laminar form in sandwich mode of construction for each accessibility to or exchangeability of functional and actuating elements.

14. Wall element or constructional unit according to one of the claims 1 to 13, characterised in that the thin-walled wall part (1, 8) adjoining the moulded body (4, 4a) of armouring means and binding means consists of sheet metal or a thin-layered areal decorative material.

15. Wall element or constructional unit according to one of the claims 1 to 14, characterised in that the thin-walled wall part (1) consisting of sheet metal adjoins a hard shell (9), which is pressed or injection-moulded on therebehind, for stiffening the sheet metal skin and the moulded body (4), which is of armouring means and binding means and firmly connected with the hard shell, adjoins thereat.

16. Wall element or constructional unit according to claim 16, characterised in that armouring means highly stressable in tension are bound into the hard shell.

17. Wall element or constructional unit according to claim 15 and 16, characterised in that a hard shell (9) adjoins the moulded body (4) at both sides.

18. Wall element or constructional unit according to one of the claims 15 to 17, characterised in that one or more recycled matter cores are formed within the moulded body (4) covered by hard shells (9).

19. Wall element or constructional unit according to one of the claims 15 to 18, characterised in that the hard shell (9) adjoining the wall part (1) is moulded on at transverse webs (11a) projecting in transverse direction.

20. Wall element or constructional unit according to one of the claims 15 to 19, characterised in that the hard shells provided with transverse webs form half shells (11), which are firmly connected with the wall part (1) and with each other.

21. Wall element or constructional unit according to one of the claims 15 to 20, characterised in that the cavities formed in the half shells (11) are filled out by armouring means and binding means or unarmoured recycled matter or armouring means and binding means with recycled matter core are provided.

22. Method for the manufacture of the wall element or constructional unit as compound body according to one of the claims 1 to 21, characterised in that the armouring means are initially laid onto the thin-walled wall part (1) laid into a mould and, after mounting a countermould, the binding means as well as a foaming agent are introduced by way of injection channels or nozzles into thus formed cavity, wherein the foaming of the binding means is performed with time delay for the achievement of an all-round sheathing of the armouring means.

23. Method according to claim 22, characterised in that the foaming agent is introduced into an open mould.

24. Method according to claim 22 or 23, characterised in that the foaming of the binding means is performed without time delay.

25. Method according to one of the claims 22 to 24, characterised in that the thin-walled wall part (1) is primed at the foaming agent application side for improvement of adhesion before the application and foaming of the binding means.

26. Method according to one of the claims 22 to 25, characterised in that the thin-walled wall part (1) is pressed or injection-moulded on therebehind with a hard shell (9) with the use of armouring means before the formation or arrangement of the moulded body (4) and a second hard shell is selectably applied subsequently onto the free side of the moulded body (4).

27. Method according to claim 26, characterised in that transverse webs (11a) are moulded on during the application of the hard shell (9).

28. Method according to one of the claims 22 to 27, characterised in that for the formation of the recycled matter core (10), a foam material or a comparable light material is also introduced during the laying-in of the armouring means (3) and the binding means (2) is injected subsequently and foamed thereafter.

29. Method for the manufacture of the wall element or constructional unit according to one of the claims 1 to 25, characterised in that the hard shells (9) with or without transverse webs (11a) as well as the moulded bodies (4, 4a), which are produced of binding means (2) and armouring means (3) by foaming, with or without recycled matter cores (10) are moulded each time separately from the wall element (1, 8) and subsequently glued together firmly with the thin-walled wall part into a compound body.

## Revendications

1. Elément de paroi ou élément de construction pour la carrosserie ou pour des parties de carrosserie de véhicules à moteur ou analogues, pour augmenter la protection contre les collisions, la rigidité en cas de compression ou de flexion, et l'effet d'isolation thermique, comprenant un élément composite constitué par une pièce à paroi mince (1), superficielle, avec un agent de liaison (2), qui se raccorde à celle-ci sur toute la surface, et des moyens de renforcement (3) dans lequel le moyen de liaison (2) est formé d'une matière que l'on peut faire mousser sur la pièce de paroi (1) ou bien dans lequel on peut coller sur toute la surface avec la pièce de paroi (1) la matière mise à l'état de mousse avec les moyens de renforcement (3) sous la forme d'un corps moulé (4, 4a), les moyens de renforcement (3) s'étendant parallèlement à la pièce de paroi (1) et l'élément composite ainsi formé recouvrant sur toute la surface les parties porteuses de la carrosserie qui s'y raccordent et les forces engendrées par la collision pouvant être de cette façon dissipées et introduites dans les parties portantes.

2. Elément de paroi ou élément de construction, selon la revendication 1,
caractérisé en ce qu'
on prévoit comme moyens de renforcement (3) des matières premières qui se dilatent après coup.

3. Elément de paroi ou élément de construction, selon la revendication 2,
caractérisé en ce que
les matières premières qui se dilatent après coup sont disposées, dans le moyen de liaison (2), à l'état non désagrégé et/ou en partie désagrégé et/ou largement désagrégé, sous la forme de fétus, de brins, de fibres, de faisceaux de fibres, de retordages de fils, de fils ou d'écorces ou sous la forme d'un matelas non tissé, d'un tissu ou d'un stratifil réalisé à partir des précédents.

4. Elément de paroi ou élément de construction, selon la revendication 2 ou 3,
caractérisé en ce qu'
on prévoit comme matières premières qui se dilatent après coup des dicotylédones, tels que du chanvre, du jute, du lin et des produits analogues, et des monocotylédones tels que des bambous ou des herbes géantes.

5. Elément de paroi ou élément de construction, selon l'une des revendications 1 à 4,
caractérisé en ce que
l'agent de liaison (2) est constitué par une matière synthétique, biologique ou dérivée de la nature ou consiste en des matrices de ces matières naturelles ou artificielles.

6. Elément de paroi ou élément de construction, selon l'une des revendications 1 à 5,
caractérisé en ce qu'
on prévoit dans les zones soumises à de moindres efforts de traction et de compression à l'intérieur du corps moulé (4) des noyaux de produits de recyclage (10) avec des propriétés de résistance moindre et un poids plus faible.

7. Elément de paroi ou élément de construction, selon la revendication 6,
caractérisé en ce que
les noyaux en produits de recyclage (10) sont constitués à partir de produits de recyclage non renforcés, tels que de la mousse des granulats mousseux, ou des particules de ceux-ci moulés ou réunis au préalable, des combinaisons de mousse de textile ou des matières textiles.

8. Elément de paroi ou élément de construction, selon l'une des revendications 1 à 7,
caractérisé en ce que
cet élément consiste en des corps moulés (4, 4a) qui sont reliés les uns aux autres et qui sont réunis à partir de deux ou plusieurs corps réalisés séparément à la manière d'un sandwich.

9. Elément de paroi ou élément de construction, selon la revendication 8,
caractérisé en ce que
les corps moulés (4, 4a), qui sont reliés les uns aux autres, consistent en des coquilles qui ménagent entre elles une cavité pour recevoir un noyau isolant.

10. Elément de paroi ou élément de construction, selon la revendication 9,
caractérisé en ce que
le noyau isolant consiste en un moyen de liaison (5) et des moyens de renforcement (3).

11. Elément de paroi ou élément de construction, selon la revendication 10,
caractérisé en ce que
le noyau isolant se compose de produits de recyclage sans moyens de renforcement.

12. Elément de paroi ou élément de construction, selon l'une des revendications 9 à 11,
caractérisé en ce qu'
on prévoit dans le noyau isolant des évidements pour recevoir des éléments fonctionnels, des éléments d'actionnement, des câbles et des éléments analogues.

13. Elément de paroi ou élément de construction, selon la revendication 8,
caractérisé en ce qu'
on le construit à la manière d'un sandwich en totalité ou en partie, pour avoir une meilleure accessibilité aux ou une plus facile interchangeabilité des éléments fonctionnels et des éléments d'actionnement.

14. Elément de paroi ou élément de construction, selon l'une des revendications 1 à 13,
caractérisé en ce que
la pièce à paroi mince (1, 8) qui se raccorde au corps moulé (4, 4a) se composant des moyens de renforcement et des moyens de liaison, est réalisée en tôle ou en une matière décorative superficielle, à couche mince.

15. Elément de paroi ou élément de construction, selon l'une des revendications 1 à 14,
caractérisé en ce qu'
- une coquille dure (9) pressée par derrière ou injectée par derrière se raccorde à la pièce à paroi mince (1) réalisée en tôle, pour assurer la rigidité de la surface en tôle, et
- le corps moulé (4), relié de façon solidaire à la coquille dure et composé des moyens de liaison et des moyens de renforcement est raccordé à la tôle.

16. Elément de paroi ou élément de construction, selon la revendication 15,
caractérisé en ce que
des moyens de renforcement pouvant être fortement sollicités à la traction sont incorporés dans la coquille dure.

17. Elément de paroi ou élément de construction, selon la revendication 15 et selon la revendication 16,
caractérisé en ce qu'
une coquille dure (9) se raccorde au corps moulé (4) des deux côtés.

18. Elément de paroi ou élément de construction, selon l'une des revendications 15 à 17,
caractérisé en ce qu'
à l'intérieur du corps moulé (4), recouvert par des coquilles dures (9) on constitue un (ou plusieurs) noyau(x) en produits de recyclage.

19. Elément de paroi ou élément de construction, selon l'une des revendications 15 à 18,
caractérisé en ce qu'
on forme sur la coquille dure (9) qui se raccorde à la pièce de paroi (1) des entretoises transversales (11a) qui s'étendent dans le sens transversal.

20. Elément de paroi ou élément de construction, selon l'une des revendications 15 à 19,
caractérisé en ce que
les coquilles dures, pourvues d'entretoises transversales, forment des demi-coquilles (11) qui sont reliées à la pièce de paroi (1) et les unes aux autres de façon solidaire.

21. Elément de paroi ou élément de construction, selon l'une des revendications 15 à 20,
caractérisé en ce que
- les cavités formées dans les demi-coquilles (11) sont remplies avec des moyens de renforcement et des moyens de liaison ou avec des produits de recyclage non renforcés ou
- on prévoit des moyens de renforcement et des moyens de liaison avec des noyaux de produits de recyclage.

22. Procédé de fabrication de l'élément de paroi ou de l'élément de construction se présentant sous la forme d'un corps composite selon l'une des revendications 1 à 21,
caractérisé en ce qu'
on pose tout d'abord les moyens de renforcement sur la pièce à paroi mince (1) insérée dans un moule et l'on introduit, après avoir posé un contre-moule les moyens de liaison ainsi qu'un agent moussant au moyen de canules d'injection ou de buses d'injection dans la cavité ainsi constituée, en faisant en sorte que le moyen de liaison se transforme en mousse avec un certain délai dans le temps pour obtenir une enveloppe de tous les côtés.

23. Procédé selon la revendication 22,
caractérisé en ce que
le moyen destiné à mousser est mis dans un moule ouvert.

24. Procédé selon la revendication 22 ou selon la revendication 23,
caractérisé en ce qu'
on réalise le moussage des moyens de liaison sans retard dans le temps.

25. Procédé selon l'une des revendications 22 à 24,
caractérisé en ce que
la pièce à paroi mince (1) est revêtue d'une couche primaire de base sur le côté destiné à recevoir la matière moussante pour améliorer l'adhérence avant le dépôt et le moussage des moyens de liaison.

26. Procédé selon l'une des revendications 22 à 25,
caractérisé en ce que
- la pièce à paroi mince (1) est pressée par derrière ou est injectée par derrière avant la constitution ou l'agencement du corps moulé (4) par une coquille dure (9) en utilisant des moyens de renforcement (3), et
- on met sur le côté libre du corps moulé (4) ensuite au choix une deuxième coquille dure.

27. Procédé selon la revendication 26,
caractérisé en ce que
lors du dépôt de la coquille dure (9) on forme des entretoises transversales (11a).

28. Procédé selon l'une des revendications 22 à 27,
caractérisé en ce qu'
on met une matière moussante ou un matériau relativement léger comparable pour former le noyau de produit de recyclage (10) lors de l'insertion des moyens de renforcement (3) et ensuite on injecte les moyens de liaison (2) et on les fait mousser ensuite.

29. Procédé de fabrication de l'élément de paroi ou de l'élément de construction selon l'une des revendications 1 à 25,
caractérisé en ce qu'
- on moule les coquilles dures (9) avec ou sans entretoises transversales (11a), ainsi que les corps moulés (4, 4a) réalisés avec des moyens de liaison (2) et des moyens de renforcement (3) par moussage avec ou sans noyaux de produits de recyclage (10) chaque fois séparément par rapport à l'élément de paroi (1, 8), et
- on les colle ensuite avec la pièce à paroi mince de façon solidaire pour obtenir un corps composite.
